# NEW EUROPEAN PATENT SPECIFICATION

(11) **EP 3 325 365 B2**
(45) Date of publication and mention of the opposition decision: **23.11.2022**
(45) Mention of the grant of the patent: 18.09.2019
(21) Application number: 16762900.5
(22) Date of filing: 22.07.2016
(51) Int. Cl.: B65D 43/16, B65D 43/24

(54) **PACKAGE WITH TWO-PART HINGE**
VERPACKUNG MIT ZWEITEILIGEM SCHARNIER
EMBALLAGE À CHARNIÈRE EN DEUX PARTIES

(30) Priority: 22.07.2015 WO PCT/NL2015/050536
(43) Date of publication of application: 30.05.2018
(73) Proprietor: N.V. Nutricia, 2712 HM Zoetermeer (NL)
(72) Inventor: PEREK, Franck, 69910 Villié Morgon (FR)
(74) Representative: Nederlandsch Octrooibureau
(86) International application number: PCT/NL2016/050549
(87) International publication number: WO 2017/014637

(56) References cited:
- EP-A1- 1 000 577
- WO-A1-2014/129887
- WO-A2-01/85551
- DE-U1- 8 308 128
- US-A- 2 527 318
- US-A- 2 797 840
- US-A- 4 787 526
- US-A- 5 048 715
- US-A- 5 511 807
- US-A1- 2008 041 861
- US-A1- 2011 214 400
- US-A1- 2014 137 522
- US-B1- 6 761 279

## Description

### BACKGROUND OF THE INVENTION

### 1. Field of the Invention

The present invention relates to packages for powder products that are to be dispensed over a period of time, in particular for infant nutrition such as powdered or granulated milk formula. The invention further relates to a package comprising a container with a two part hinge together with a quantity of product.

### 2. Description of the Related Art

Infant milk formula has been sold in various forms of package for many years. Metal cans were initially the preferred container as they were relatively easy and cheap to produce and could be sealed for long term storage. The seal comprised an aluminium foil across the mouth of the container that was removed on first use. As a single container would be used for an extended period, the containers were provided with resealable plastic lids which gripped over the outer rim of the can. A measuring scoop was frequently included with the container, either packaged separately or within the can itself. Compared with modern materials, such cans are now considered relatively expensive and heavy.

More recently, alternative packaging forms have become available which improve on the existing cans. These include plastic and foil laminate container bodies and hinged lid assemblies having a facility to receive and retain a measuring scoop. One such package is described in US 2008041861, which discloses a lid assembly according to the preamble of appended claim 1 and a package according to the preamble of appended claim 14. That package comprises a container with a lid assembly placed on the container and a sealing film that is fixed to the container wall. The lid assembly is of a type that has a circumferential rim for attachment to the container and a hinged lid which closes an opening defined by the rim. The seal is provided with a tear lip and a weakening line by which it may be opened and partially removed. This known package has a lid assembly comprising a lid and a rim that are integrally formed in an injection moulding procedure and hingedly attached to each other by a living hinge.

Existing living hinge arrangements of this type impose limitations on the shape of the lid and the rim due to the manner in which moulding takes place. Furthermore, the hinge usually extends beyond the external boundaries of the lid assembly, adding to the overall bulk on stacking containers together.

Packages are known for other products having lid and rim assemblies formed separately and joined at a hinge. Such constructions may be referred to as two-piece hinges since each of the rim and the lid comprises a portion of the hinge. Although these constructions offer further options to the designer, they are nevertheless, sensitive to tampering. For nutritional products a tamper proof closure is frequently provided to prevent or at least indicate when unauthorized opening of the lid has occurred. If the lid can be opened by interfering with the hinge, this may obviate the tamper proof closure. Furthermore it should be noted that for mass produced packaging, the strength of individual elements is frequently related to the material thickness used and hence the cost of the package.

In light of the above, it would be desirable to provide an alternative package and hinge construction that alleviated at least some of the perceived inconveniences of the prior art.

### BRIEF SUMMARY OF THE INVENTION

According to the invention there is provided a lid assembly for use in a package for a powdered nutritional product in accordance with claim 1. The package comprises a container for receiving the nutritional product, the container having a base and a peripheral wall, a circumferential rim for connection to the container and defining an access opening and a lid, pivotably attached to the rim by at least one hinge having a hinge axis. The lid has an open position and a closed position in which it closes the access opening. The hinge comprises a rim portion, integral with the rim, and a lid portion, integral with the lid, that can be engaged to each other to join the lid to the rim and are arranged such that the lid portion can only be engaged with the rim portion in the open position of the lid and that, in the closed position of the lid, the lid portion is locked to the rim portion, preventing separation of the lid portion from the rim portion. In this context, it is understood that preventing separation is intended to denote that the parts cannot be separated without causing damage to the package that would either prevent the package from being further used or at least indicate that tampering had occurred.

The hinge portions comprise a pin and a recess, the pin defining the hinge axis and being arranged to rotate within the recess to allow pivoting of the lid. The recess may have an entrance and the pin may have a cross-section allowing its entry to the recess through the entrance to engage the lid portion and the rim portion. In order to allow connection in the open position of the lid and prevent separation in the closed position, the entrance may be oriented in a direction parallel to a plane of the access opening. In other words, the entrance may be directed backwards or forwards. The precise direction of the entrance will depend on whether the pin or the recess is formed on the lid and it will be understood that complex shapes may be envisaged. Nevertheless, it should be excluded that the hinge portions can be disengaged by lifting or prising open of the lid at the side where the hinge is located. The recess may have various configurations but in one embodiment has one or more hook-like elements that engage over and around the pin to prevent removal of the pin in an upwards direction without bending or breaking of the hook.

It is understood that the lid and the rim cannot be disengaged in the closed position of the lid. Once the lid is open, this may be possible without breaking of the hinge portions. It is however not excluded that the engagement is permanent and that once the lid portion and hinge portion are engaged, removal may be prevented in all positions. According to one embodiment, the lid portion may be engaged with the rim portion by a snap connection between the pin and the recess. The entrance to the recess may be slightly smaller than a cross-section or diameter of the pin. In this case, resilient deformation of either the recess or the pin may take place in order to allow connection to occur. In the case that hooks are provided to form the recess, these may flex to allow the pin to pass through the entrance. The snap connection may be reversible.

In one embodiment, the pin is supported at both of its ends. This provides additional strength to the construction with a minimum increase in material. In the case that the pin is provided on the lid, the support may be provided by mounts extending from the lid and integrally moulded therewith.

The pin is an elongate solid cylinder and is additionally provided with functional elements extending from its surfaces. These include an abutment surface for defining a maximum opening of the lid and a detent surface, which defines an intermediate opening position. The functional elements may be provided on any of the surfaces either of the pin itself or of the related mounts and may be formed as protrusions or recesses. In one embodiment the functional elements may be surfaces that extend from an outer circumference of the cylinder.

In the following, reference will be made to the pin being provided on the lid portion and the recess being provided on the rim portion. This configuration has certain advantages in terms of guiding the pin into the recess during assembly of these parts. It will however be understood that the reverse of this arrangement is equally possible.

According to the invention, the hinge comprises abutment surfaces on the lid portion and the rim portion that mutually engage one another at a fully open position of the lid to prevent further opening. As described above, these abutment surfaces may be provided as functional elements on a pin or recess forming the hinge but may also be provided by other elements in the case of other hinge constructions. The fully open position of the lid may be chosen according to the particular configuration of the package and may lie between 100 degrees and 150 degrees from the closed position. According to another aspect of the invention, as claimed in claim 14, the lid may be applied to a relatively light container i.e. one where the weight of the lid is relatively large compared to that of the container, especially as it becomes empty. This may be the case when the container is of a thin-walled construction such as a thermoformed container, while the lid is of more robust injection moulded construction. In this case, it is important that the lid cannot open too far and destabilise the container. In one embodiment the fully open position may be around 120 degrees. Further details regarding desirable configurations of the package to ensure stability are given below.

According to the invention, it is desirable to have a detent position for the lid. In this context, a detent position is intended to refer to a position of opening where the lid experiences an increased resistance to opening or closing. The hinge comprises a detent mechanism that provides resistance to pivoting of the lid past the detent position. The detent position may be symmetrical i.e. where an equal resistance is encountered on proceeding in both direction, or asymmetrical, namely where a greater force is required in one direction than in the other. In the present case, the detent mechanism can be provided to hold the lid in an open position during use and prevent the lid from closing until a minimal force has been overcome. The detent position may be between 70 degrees and 110 degrees from the closed position, preferably around 90 degrees.

It will be understood that the package may comprise a single hinge e.g. located centrally on one side of the lid or extending along that side. In one embodiment of the invention, the package comprises two hinges. These may be separated from each other and aligned. Their spacing will be dependent on the construction of the package in order to ensure adequate resistance against unauthorised opening.

In one embodiment of the package, the rim comprises an upstanding circumferential flange surrounding the opening and the lid comprises a downward extending groove, the flange being inserted into the groove on closing the lid to form a first seal. This arrangement not only ensures sealing of the package but also ensures that the lid cannot move laterally with respect to the rim when in the closed position. In this manner, the separation of the hinge portions is further prevented. Only once the lid is open to a position that the flange and groove are no longer engaged can lateral movement take place to disengage the hinge portions.

In a further embodiment, the lid has an exterior surface extending to an outer circumference and the hinge axis is co-linear with the outer circumference. The exterior surface is preferably a curved surface and locating the hinge at an edge of this surface avoids disturbing the surface while ensuring that the hinge can be straight or, in the case of multiple hinges, that the individual hinges are aligned.

According to another embodiment, the rim may have an inner skirt engaging with the container to form a second seal and an outer skirt forming an exterior surface of the package. The outer skirt may form a curved surface which may match and be coplanar with the lid, at least at the point at which these surfaces meet. The hinge axis may be located radially between the limits of the inner and outer skirts. As mentioned above, in the case of existing one-piece hinges, the hinge may have protruded beyond the envelope of the package or lid, occupying additional space and being unsightly. The present configuration significantly improves this situation while retaining the ability to have a relatively large access opening. Of further significance, since the inner skirt provides for sealing engagement with the container, the rim portion of the hinge need not be hermetic with respect to the circumferential rim. In other words, an opening through the rim may be present at the location of the rim portion of the hinge without compromising the sealing of the container. This allows for greater flexibility in manufacture. The same may apply for the lid, with the lid portion of the hinge being located radially outwardly of the downward extending groove which defines the first seal between the lid and the rim.

According to a still further aspect of the invention, the container may comprise an under-rim, bonded to the peripheral wall of the container. In this case, the second seal may be formed between the rim and the under- rim. The function of the under-rim will be further understood with reference to the description but it will be understood that together with the circumferential rim it can form a structural unit in the assembled configuration of the package. It is also circumferential in shape and defines an access opening to the interior of the container. It is understood that circumferential is not intended to be limited to circular shapes and the access opening is preferably quasi-rectangular. The under-rim is preferably injection moulded and can be bonded to the container by any suitable process, including gluing or welding, preferably to an annular flange formed on the peripheral wall during its production. The rim and the under-rim may connect together in a snap-fit connection or by any other suitable means that allows them to be assembled within a production environment..

The first and second seals according to the invention are preferably insect-tight seals. In the following, an insect-tight seal will be defined as a seal that avoids any opening of 70 microns or greater at any point of the seal. Experience in the field of food packaging in tropical climates has determined that this value is generally adequate to avoid ingress of the smallest insects that may be detrimental to food hygiene. By providing the first and second seals to be insect-tight, ingress of such insects to the interior of the container can be avoided, even after the container has been first opened and when powder particles are present around the lid and frames. The first and second seals may also be water-tight, preferably to at least 3 cm of water. In this context it should also be understood that the seals referred to are completely different from the initial hermetic seal provided during packaging, which may be achieved by a sealing foil. In general a package for a nutritional product will be storable for an extended period of time in an unopened condition due to the careful selection of the materials and construction of the package itself. The first and second seals referred to above are those that play a role during use and reclosure of the once opened package.

The invention is particularly applicable to packages wherein the container is of a relatively light construction relative to the lid assembly. In one embodiment, the base and peripheral wall of the container may comprise a thin-walled thermoformed tub having a wall thickness of between 0.1 and 0.6 mm, preferably between 0.2 mm and 0.4 mm. The container may also comprise a carton sleeve, provided to at least partially enclose the tub.

In a further aspect of the invention the lid or the rim may be provided with a tamper evident closure indication provided at a location opposite to the hinge. At this location there may be a catch or closure mechanism for closing the lid and the closure may be provided with an appropriate tamper evident indicator. A permanently adhered label may also be used that must be torn on first use. The skilled person will be familiar with the various possibilities that can be implemented in this context.

The invention also relates to a filled package containing a quantity of powdered nutritional product sealed within the container. A sealing foil may be present over the mouth of the container, closing the access opening prior to use. In one particular embodiment the nutritional product comprises infant milk formula. The lid assembly may be manufactured and assembled separately and provided to a packaging assembly for integration into the package at another location.

The invention also relates to a method of manufacturing a package for a powdered nutritional product according to claim 13, said method comprising: thermoforming a container for receiving the nutritional product, the container having a base and a peripheral wall; injection moulding a circumferential rim defining a wide access opening, integrally formed with a rim portion of a hinge; injection moulding a lid for reclosing the access opening, integrally formed with a lid portion of a hinge; attaching the lid to the rim by engaging the rim portion to the lid portion in an open position of the lid and subsequently closing the lid onto the access opening to form a lid assembly; filling the container with the product; sealing the product within the container by means of a sealing foil; and connecting the rim and lid assembly to the container. The package and its components may be as described above or hereinafter.

A package for a powdered nutritional product is also described, comprising: a container portion for receiving the nutritional product, the container portion comprising a thermoformed plastic tub having a base and a peripheral wall defining a product containing space; a closure portion for attachment to the container portion, the closure portion comprising a circumferential rim defining an access opening and a lid, pivotably attached to the rim by at least one hinge having a hinge axis, the lid having an open position and a closed position in which it closes the access opening; and a seal, separating the container portion from the closure portion and sealing the product containing space prior to use. According to this aspect of the invention, the closure portion has a mass that is equal to or greater than the mass of the container portion and the hinge is arranged to prevent opening of the lid beyond a point at which the package, when empty of product, is unstable. As a result of the particular construction described above and hereinafter, it is possible to manufacture a container portion that is exceptionally light. In this context, the closure portion may be defined as the part of the package above the sealing foil and equal to or greater than the mass of the container portion is intended to mean that the closure portion may have a mass that is at least 40% of the mass of the empty package, preferably more than 45% of the total mass or even more than 50% of the total mass.

In order to achieve the desired sealing properties, the lid portion, may need to be of a construction that is relatively heavy compared to the container. This can lead to the package, in its empty condition, being top-heavy. For this reason, opening of the lid should be limited to an angle that does not cause the centre of gravity of the total package to move outside the area of the base. The empty package may be considered to be unstable at the point when the centre of gravity of the total package aligns with an edge of the base in contact with the surface on which it stands. It will be understood that as the lid is opened by pivoting about the hinge, the centre of gravity of the lid will pass over the hinge axis and will exercise an ever more important moment about the edge of the base.

In one example opening of the lid may be limited to an opening angle of around 100 degrees, or around 110 degrees or even 120 degrees. The skilled person will understand that the precise limit will depend upon the relative weights of these components and also on the relative dimensions of the base compared to the height of the container.

The invention is particularly important for packages in which the height of the container portion is relatively large compared to the width of the base. In particular, for containers where the height of the tub is greater than the base width i.e. the portion of the base that makes contact with the surface on which it stands. The invention may be especially applicable to containers where the height is 50% greater than the base width or even twice as high as the base width.

The invention is also particularly applicable to packages where the hinge of the lid is located at a position that is further from the centre of gravity of the package than the widest point of contact of the base with the surface on which it stands. If we denote the location of the hinge axis from the centreline of the package as defining a hinge offset, the invention is believed to be particularly applicable for packages in which the hinge offset is at least equal to 70% of the base width, or even 80% of the base width.

In one embodiment, the container portion, comprises a thermoplastic formed tub and a carton sleeve surrounding it. Such a container of 2 litre volume may weigh as little as 55g, while the closure portion may weigh a similar amount. If the actual lid weighs around 25g, the effect of opening the lid beyond the vertical can have a significant effect on the overall balance of the package. According to the invention, a container of more than 1.5 litres in volume, with an empty weight of less than 100 g can be adequately sealed with a hinged lid.

As described above and hereinafter, the closure portion may further comprise an under-rim, permanently connected to the container portion. In this context, the under-rim is designated as part of the closure portion since it contributes to the top-heavy effect on the overall package. It will nevertheless be understood that from a constructional aspect the under-rim may be associated with the container rather than with the lid.

### BRIEF DESCRIPTION OF THE DRAWINGS

The features and advantages of the invention will be further appreciated upon reference to the following drawings of a number of exemplary embodiments, in which:
Figure 1 shows a package according to the present invention in partly exploded perspective view;
Figure 2 shows a perspective view of the package of Figure 1 with closed lid;
Figure 3 shows a perspective view of the package of Figure 1 with opened lid;
Figure 4 shows a partial cross-section through the package of Figure 2 along line IV-IV;
Figures 5, 5a and 5b show details of the lid of Figure 1;
Figures 6, 6a and 6b show details of the circumferential rim of Figure 1;
Figures 7a to 7d show cross-sections in the direction VII-VII of Figure 3 with the lid in various positions with respect to the circumferential rim; and
Figures 8a to 8d show cut-away perspective views of one of the hinges of Figure 2 in various positions of use taken from the rear of the package in the direction VIII.

### DESCRIPTION OF ILLUSTRATIVE EMBODIMENTS

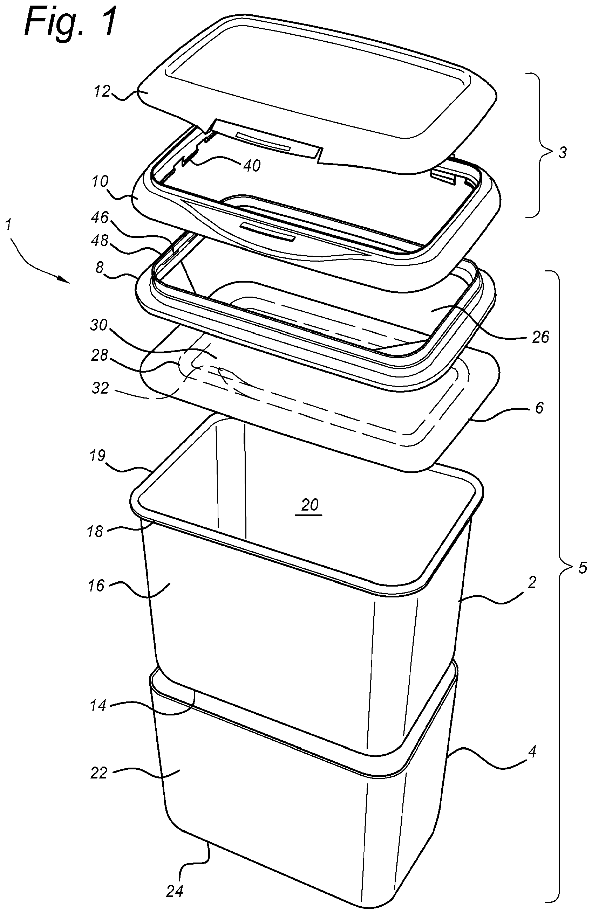

Figure 1 shows a partially exploded view of a package 1 according to the present invention comprising a lid assembly 3 and a container 5. The container 5 comprises a tub 2, a sleeve 4, a membrane seal 6 and an under-rim 8. The lid assembly 3 includes a circumferential rim 10 and a lid 12.

The tub 2 is thermoformed of relatively thin polypropylene material and has a base 14 and a peripheral wall 16 defining a product containing space 20. The peripheral wall 16 extends to an upper edge 18 having an outwardly directed annular flange 19. The sleeve 4 is formed of carton and has wall 22 and a bottom 24. Under-rim 8 is an annular ring having an upstanding second sealing flange 48 surrounding an access opening 26 of a similar dimension to the product containing space 20. Between the first sealing flange 48 and the access opening 26 are located detent openings 46, the function of which will be further explained below. The circumferential rim 10 is also in the form of a ring and is provided with barbs 40 extending downwardly. The under-rim 8 and circumferential rim 10 are also made of polypropylene although it will be understood that other appropriate materials could be employed. The membrane 6 includes a tear line 28 defining an opening region 30 and includes a pull tab 32.

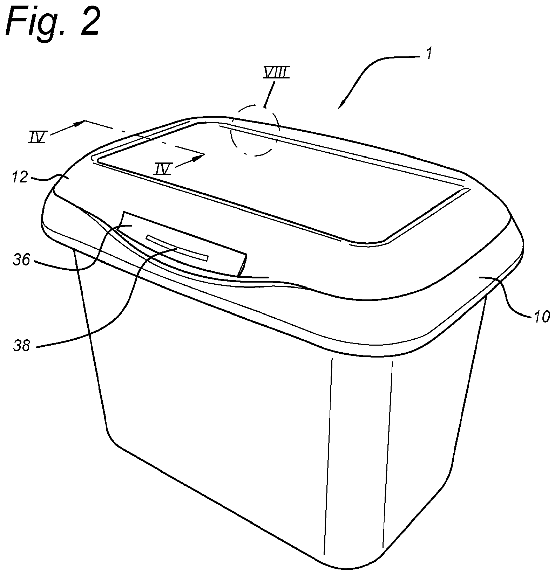

Figure 2 shows a perspective view of the package 1 of Figure 1 in the assembled state with the lid 12 closed. A catch 36 on the front edge of the lid 12, engages with a rib 38 on the circumferential rim 10 to maintain the lid 12 closed. The lid 12 is also made of polypropylene.

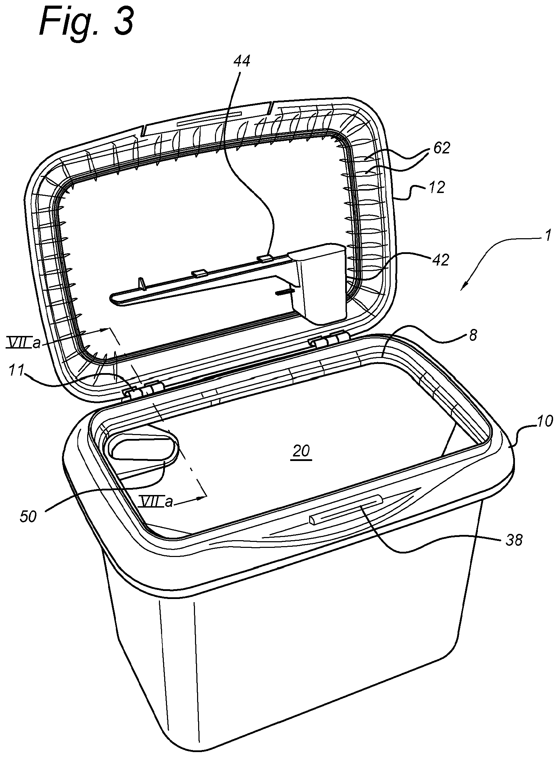

Figure 3 shows a perspective view of the package 1 of Figure 1 in the assembled state with the lid 12 open and the membrane removed to provide access to the product containing space 20. A scoop 42 is held within the lid 12 by clips 44 and can also be positioned in a scoop holder 50 integrally formed with the lower frame 8. Also visible are hinges 11 allowing pivoting connection between the lid 12 and the upper frame 10 and the rib 38.

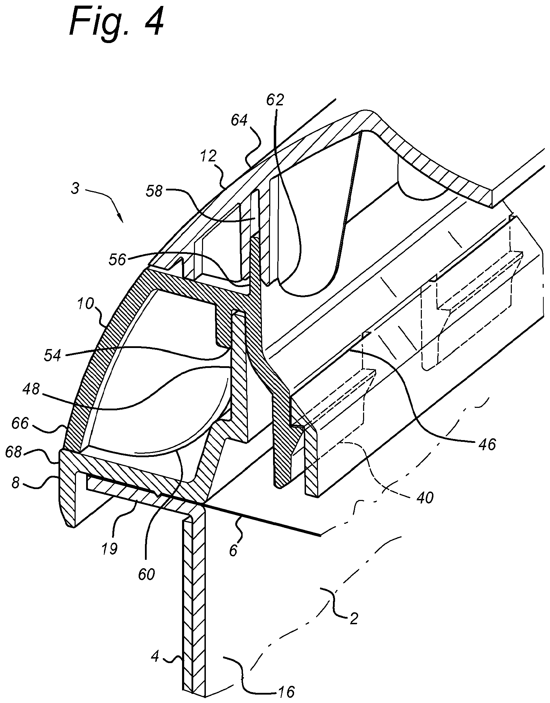

Figure 4 is a perspective cross-section along line IV-IV of Figure 2. As can be seen, the membrane 6 is attached across the annular flange 19 of the tub 2 and sandwiched by the under-rim 8 which overlies the annular flange 19. The annular flange 19, membrane 6 and under-rim 8 are all welded together to form a single relatively rigid rim structure. Circumferential rim 10 is mechanically engaged with the under-rim 8 by the downwardly extending barbs 40 that engage through the detent openings 46 in the under-rim 8. As can also be seen in this view, sleeve 4 closely engages against the peripheral wall 16 of tub 2, extending up to beneath the annular flange 19 to provide additional support. This allows the circumferential rim 10 to be snapped into the under-rim 8 without causing deformation or collapse of the tub 2.

According to an important aspect of the invention, the lid assembly 3 is provided with two seals. A circumferential first seal is formed by an upstanding first sealing flange 56 on the upper side of the circumferential rim 10 which engages with a downward extending first groove 58 on the underside of the lid 12. A circumferential second seal is formed by the upstanding second sealing flange 48 which engages with a downward extending second groove 54 on an inner skirt of the circumferential rim 10. Lead-in webs 62, 60 are located on either side of the first groove 58 and second groove 54 respectively and provide assistance during assembly and additional strength. Figure 4 also shows that the circumferential rim 10 has an outer circumferential skirt 66 and the lid 12 has an exterior surface 64. The exterior surface 64 and the outer skirt 66 are co-planar in the closed position of the lid 12. In other words, both of the lid 12 and circumferential rim 10 have external surfaces that blend smoothly together at this location. Additionally, the under-rim 8 has a peripheral surface 68 and the peripheral surface 68 and outer skirt 66 are also co-planar when the circumferential rim 10 and under-rim 8 are connected together as shown.

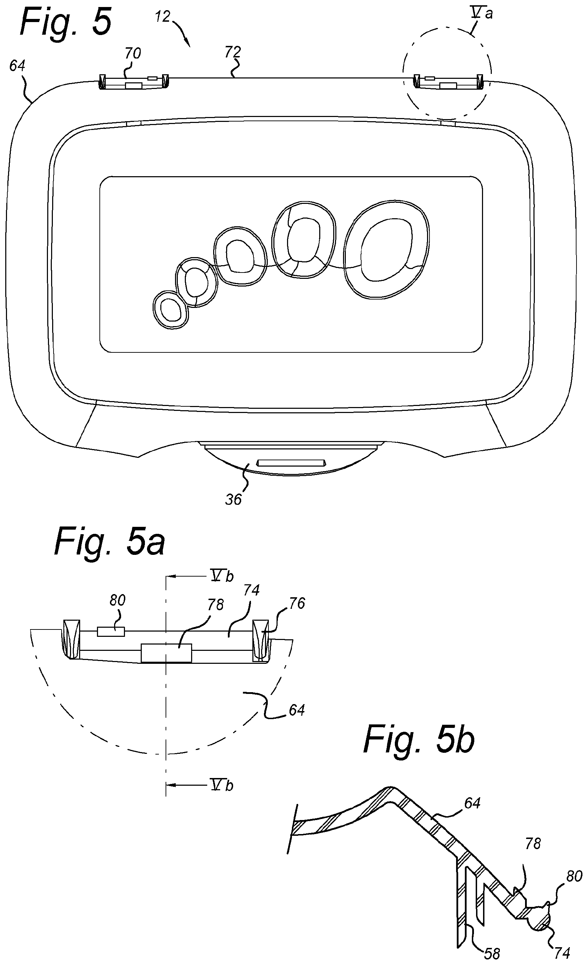

Figure 5 shows a plan view of the lid 12 of Figure 1 in isolation. Like the tub 2, the lid 12 is generally rectangular in shape with curved corners. The exterior surface 64 is interrupted at the front edge of the lid 12 by catch 36 and at the rear edge 72 of the lid 12 by lid portions 70 of hinges 11, which are aligned with each other and with the rear edge 72.

Figure 5a shows a detail of one of the lid portions 70 of Figure 5. It comprises a cylindrical pin 74 supported at either end by a mount 76 integrated with the exterior surface 64. Adjacent the mid-point of pin 74, the lid portion 70 is provided with a first abutment surface 78 and to one side of the first abutment surface 78 is located a detent surface 80, the functions of which will be described below.

Figure 5b shows a cross-section through the lid portion 70 of Figure 5a in the direction Vb-Vb. As can be seen, the first abutment surface 78 extends from the cylindrical surface of the pin 74 and is also connected to the exterior surface 64 of the lid 12. The detent surface 80 also extends from the cylindrical surface of the pin 74 in a direction opposite to that of the first abutment surface 78. Also shown is the downward extending first groove 58 on the underside of the lid 12.

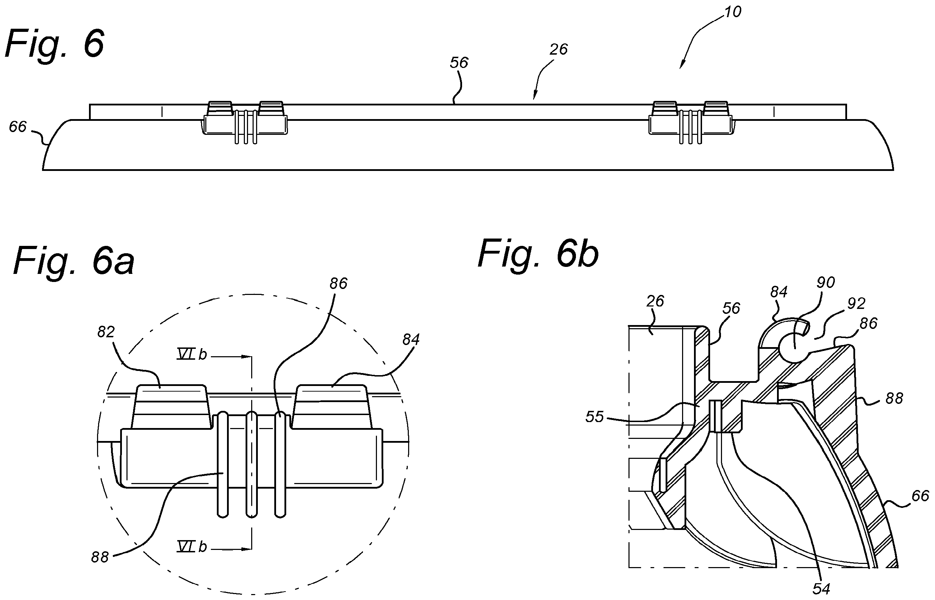

Figure 6 shows a rear view of the circumferential rim 10 of Figure 1 taken in the plane of the access opening 26 showing the outer skirt 66, the upstanding first sealing flange 56 and the rim portions 82 of the hinges 11.

Figure 6a is a detail of one of the rim portions 82 of Figure 5. The rim portion 82 comprises a pair of hooks 84 aligned with each other and separated by a second abutment surface 86 formed by ribs 88. By implementing the abutment surface 86 in the form of ribs 88, adequate strength may be achieved while avoiding a massive section that would be subject to different moulding and cooling parameters to the remainder of the circumferential rim 10.

Figure 6b shows a cross-section through the rim portion 82 of Figure 6a in the direction VIb-VIb showing the hooks 84, the second abutment surface 86 and the ribs 88 which merge with the outer skirt 66. Also shown is the upstanding first sealing flange 56 and the downward extending first groove 54 on the inner skirt 55. As can be seen in this view, the hooks 84 form a cylindrical recess 90 having an entrance 92 opening in a direction facing away from the access opening 26.

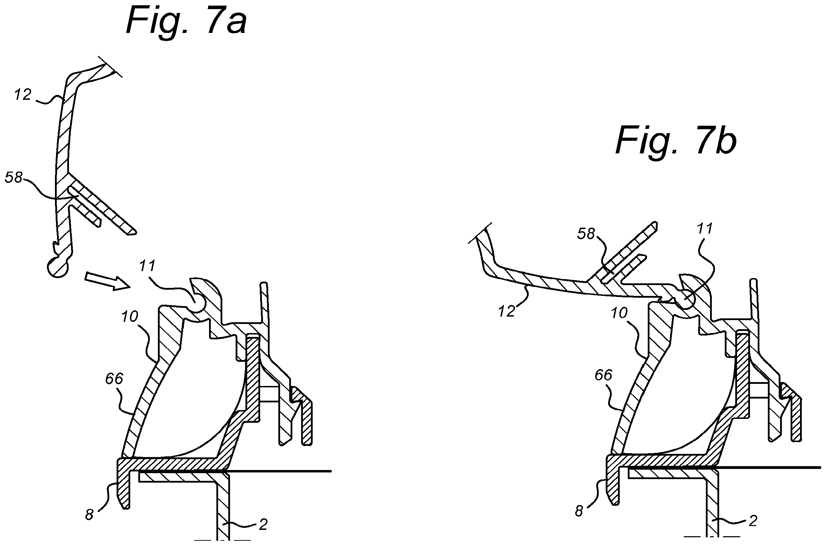

Figures 7a to 7d show cross-sections in the direction VII-VII of Figure 3 with the lid 12 in various positions with respect to the circumferential rim 10. In Figure 7a, the lid 12 is separate from the rim 10, prior to assembly. The lid 12 is in an upright position with the pin 74 located adjacent to the entrance 92 to the recess 90. As can be seen, the pin 74 is marginally larger than the entrance 92 and can enter the recess 90 in the direction of arrow A in a snap fit connection. Removal of the pin 74 from the recess 90 is also possible in this position of the lid 12, without causing damage.

Figure 7b shows the lid 12 in the fully opened position, assembled to the rim 10 at the hinge 11. At this position, the first abutment surface 78 engages the second abutment surface 86 to prevent further opening of the lid 12. This position corresponds to an opening angle of around 120 degrees.

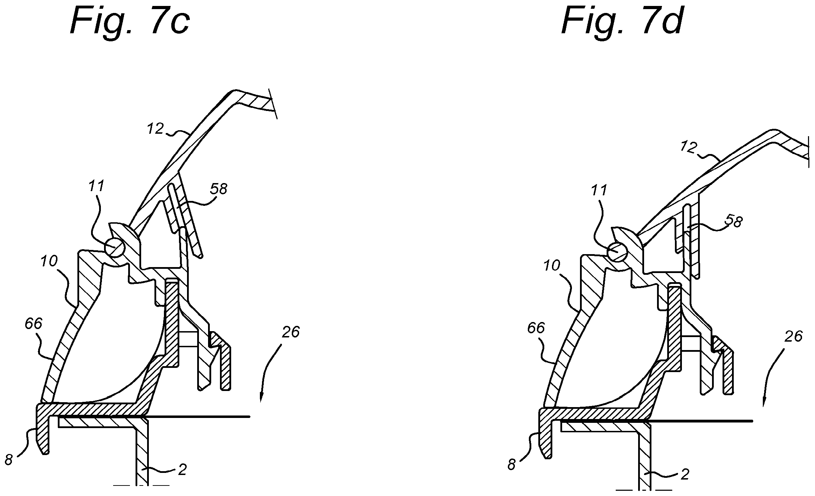

Figure 7c shows the hinge 11 with the lid 12 in a partially closed position and with the upstanding second rim 56 entering the second groove 58.

Figure 7d shows the lid 12 in the closed position, with the upstanding second rim 56 engaged within the second groove 58. In this position (not shown in this view) the catch 36 may be engaged with the rib 38 on the circumferential rim 10 to maintain the lid 12 closed. This position also corresponds to the packaged condition prior to first use. For the sake of clarity, it is noted that although Figures 7a to 7d have been described in sequence, assembly of a package will not usually take place in this manner, since the lid 12 and circumferential rim 10 will generally be assembled to form a lid assembly 3 prior to assembly with the container 5.

According to an important aspect of the invention, in the closed position of the lid 12 according to Figure 7d, removal of the pin 74 from the recess 90 is not possible without breaking or damaging the hooks 84. This is because the engagement of the upstanding second rim 56 within the second groove 58 precludes any movement of the lid 12 in a lateral direction, parallel to a plane of the access opening 26. The only movement that the pin 74 can make is upwards but this is prevented by the hooks 84.

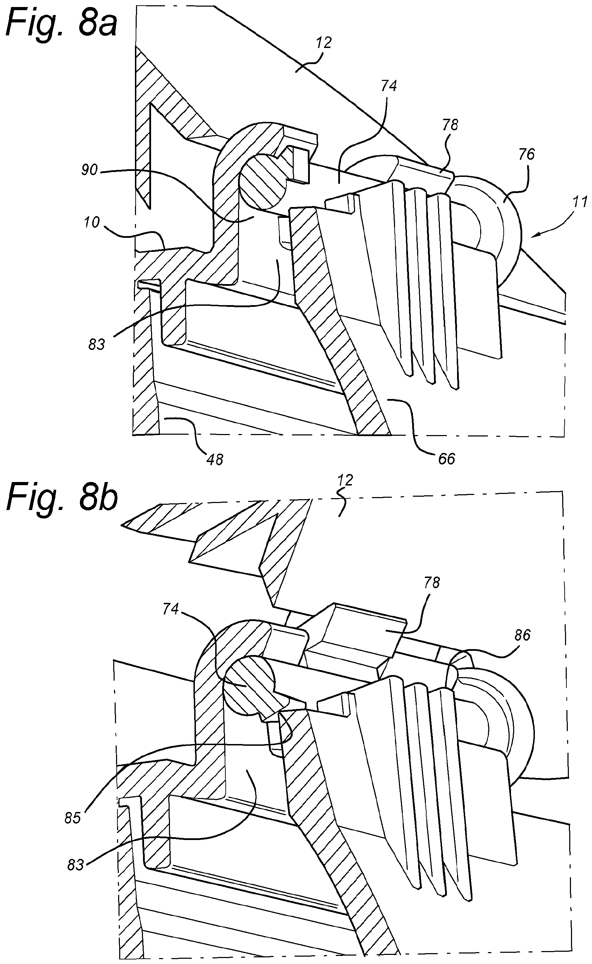

Operation of the hinge 11 and the detent surface 80 will be further described with reference to Figures 8a to 8d, which show a cut-away perspective view of one of the hinges 11in various positions of use taken from the rear of the package in the direction VIII according to Figure 2.

According to Figure 8a, the lid 12 is shown in a closed position on the circumferential rim 10 corresponding to the position illustrated in Figure 7d. The pin 74 is engaged within the recess 90 and is retained by the hooks 84 against upwards movement. The first abutment surface 78 is spaced from the second abutment surface 86 and the ribs 88 are clearly visible. Also visible in this view is the detent surface 80, extending from the surface of the pin 74within the entrance 92 to the recess 90. Adjacent to the detent surface 80, the rim portion 82 of the hinge 11 has an opening 83 extending through the outer skirt 66. Because this opening 83 is radially outwards of the second sealing flange 48, there is no consequence for the sealing of the container 5.

Figure 8b shows a similar view to Figure 8a, with the lid 12 opened to an angle of around 70 degrees with respect to the closed position. At this point, the first abutment surface 78 is still spaced from the second abutment surface 86 but the detent surface 80 has started to engage with an edge 85 of the opening 83. The user will detect this as a slight resistance to pivoting of the lid 12. The detent surface 80 is not radially symmetrical with respect to the pin 74 and during pivoting acts as a cam against the edge 85, whereby the resistance gently increases with rotation.

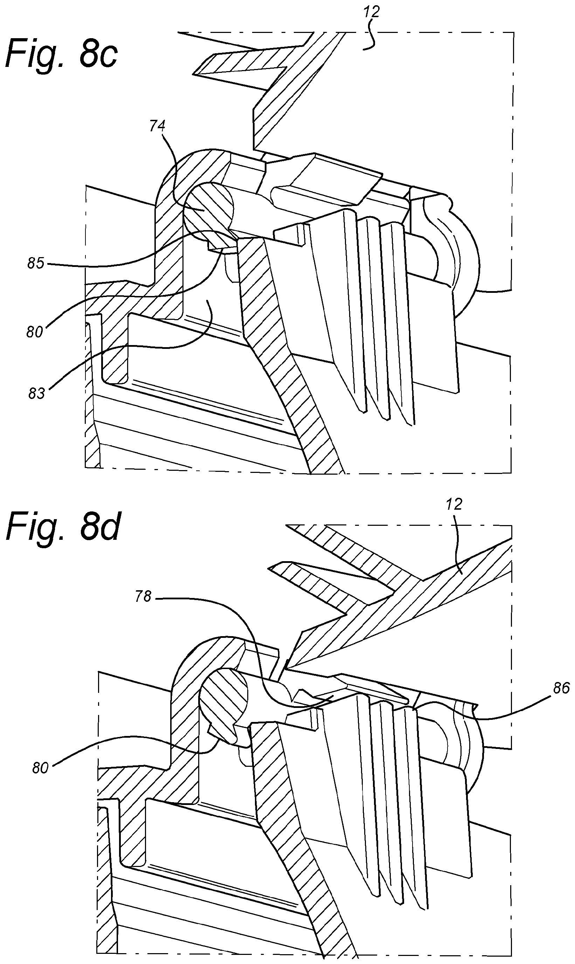

Figure 8c shows a similar view to Figure 8b, with the lid 12 pivoted to an angle of 90 degrees with respect to the closed position. At this point, the detent surface 80 has cleared the edge 85 of the opening 83 and resistance to further pivoting in the open direction is reduced again. The detent surface 80 is now beneath the pin 74 and located within the opening 83.

Figure 8d shows a similar view of the lid 12 in the fully open position, pivoted to an angle of 120 degrees with respect to the closed position of Figure 8a. At this position, the first abutment surface 78 is engaged with the second abutment surface 86, resisting further rotation of the lid 12. Once the lid 12 has passed the vertical position shown in Figure 8c and overcome the resistance of the detent surface 80, it is free to fall towards the position of Figure 8d under gravity or by virtue of its existing inertia. For a package 1 that is almost empty, the lid 12 has a significant mass compared to the remainder of the package 1. This is particularly the case for the exemplary thin-walled tub 2 described which, for a tub of around 2 litres in volume, has a mass of around 25 g, which compares with a mass of the lid 12 of around 24g. For this reason, limiting the angle through which the lid 12 can rotate to around 120 degrees avoids additional moment being applied to the package 1, which could lead to it toppling backwards with undesirable consequences.

It will be understood that limiting the angle beyond the vertical by which the lid 12 can pivot can also have the consequence that it easily falls back to the closed position, either by rebound or by being knocked. This can easily occur, especially in the case of infant formula while trying to manipulate items with one hand. As a result of the detent surface 80, this inconvenience is obviated. With reference to Figure 8c, on closing of the lid 12, it will be noted that at an angle of 90 degrees, the detent surface will again engage with the edge 85 of the opening 83. In this direction of movement, the force required for the detent surface 83 to overcome the edge 85 is greater due to the asymmetric shape of the detent surface 83. The lid 12 cannot fall back to the closed position without an additional force being applied.

Thus, the invention has been described by reference to certain embodiments discussed above. It will be recognized that these embodiments are susceptible to various modifications and alternative forms well known to those of skill in the art. In particular, both the hinges and the container may be distinct from the schematically illustrated design.

Many modifications in addition to those described above may be made to the structures and techniques described herein without departing from the scope of the invention. Accordingly, although specific embodiments have been described, these are examples only and are not limiting upon the scope of the invention.

## Claims

1. A lid assembly for use in a package (1) for a powdered nutritional product comprising:
a circumferential rim (10) for connection to the container and defining an access opening (26); and
a lid (12), pivotably attached to the rim by at least one hinge (11) having a hinge axis, the lid having an open position and a closed position in which it closes the access opening;
**characterised in that** the hinge comprises a rim portion (82), integral with the rim, and a lid portion (70), integral with the lid, that can be engaged to each other to join the lid to the rim and are arranged such that the lid portion can only be engaged with the rim portion in the open position of the lid and that, in the closed position of the lid, the lid portion is locked to the rim portion, preventing separation of the lid portion from the rim portion wherein the rim portion and the lid portion of the hinge comprise a pin (74) and a recess (90), the pin defining the hinge axis and being arranged to rotate within the recess to allow pivoting of the lid and the pin is an elongate solid cylinder provided with an abutment surface (78) and a detent surface (80) to limit pivotal movement of the lid, wherein the abutment surface defines a fully open position of the lid and the detent surface defines an intermediate opening position.

2. A package for a powdered nutritional product comprising:
a container (5) for receiving the nutritional product, the container having a base (14) and a peripheral wall (16); and
the lid assembly of claim 1.

3. Package according to claim 2, wherein:
- the recess has an entrance (92) and the pin has a cross-section allowing its entry to the recess through the entrance to engage the lid portion and the rim portion, the entrance being oriented in a direction parallel to a plane of the access opening; or
- the lid portion is engaged with the rim portion by a snap connection between the pin and the recess; or
- the pin is supported at both of its ends; or
- the abutment surface and detent surface extend from an outer circumference of the cylinder; or
- the pin is provided on the lid portion and the recess is provided on the rim portion; or
- the lid is pivotably attached to the rim by two hinges.

4. Package according to claim 2 or 3, wherein the hinge comprises abutment surfaces (78, 86) on the lid portion and the rim portion that engage one another at a fully open position of the lid to prevent further opening and wherein the fully open position of the lid is preferably between 100 degrees and 150 degrees from the closed position, more preferably around 120 degrees.

5. Package according to any of claims 2 to 4, wherein the hinge comprises a detent mechanism (80, 85) that holds the lid in an open position and provides resistance to pivoting of the lid past a detent position in the direction of the closed position and wherein the detent position is preferably at an angle of between 70 degrees and 110 degrees from the closed position, more preferably around 90 degrees.

6. Package according to any of claims 2 to 5, wherein the rim comprises an upstanding circumferential flange (56) surrounding the opening and the lid comprises a downward extending groove (58), the flange being inserted into the groove on closing the lid to form a first seal.

7. Package according to any of claims 2 to 6, wherein the lid has an exterior surface (64) extending to an outer circumference and the hinge axis is co-linear with the outer circumference.

8. Package according to any of claims 2 to 7, wherein the rim has an inner skirt (55) for engagement with the container to form a second seal and an outer skirt (66) forming an exterior surface of the package and the hinge axis is located radially between the inner and outer skirts.

9. Package according to any of claims 2 to 8, wherein the container further comprises an injection moulded under-rim (8), bonded to the peripheral wall of the container and the rim sealingly engages with the under- rim and wherein the rim and the under-rim preferably connect together in a snap-fit connection.

10. Package according to any of claims 2 to 9, wherein the base and peripheral wall of the container comprise a thin-walled thermoformed tub (2) having a wall thickness of between 0.1 and 0.6 mm, preferably between 0.2 mm and 0.4 mm.

11. Package according to any of claims 2 to 10, wherein the lid or the rim are provided with a tamper evident closure indication provided at a location opposite to the hinge.

12. Package according to any of claims 2 to 11, further comprising a quantity of powdered nutritional product sealed within the container and wherein the nutritional product preferably comprises infant milk formula.

13. Method of manufacturing a package for a powdered nutritional product comprising:
thermoforming a container for receiving the nutritional product, the container having a base and a peripheral wall;
injection moulding a circumferential rim defining a wide access opening, integrally formed with a rim portion of a hinge
injection moulding a lid for reclosing the access opening, integrally formed with a lid portion of a hinge;
attaching the lid to the rim by engaging the rim portion to the lid portion in an open position of the lid and subsequently closing the lid onto the access opening to form a lid assembly;
filling the container with the product;
sealing the product within the container by means of a sealing foil; and
connecting the lid assembly to the container,
wherein the rim portion and the lid portion of the hinge comprise a pin and a recess, the pin defining the hinge axis and being arranged to rotate within the recess to allow pivoting of the lid and the pin is an elongate solid cylinder provided with an abutment surface and a detent surface to limit pivotal movement of the lid.

14. A package (1) for a powdered nutritional product comprising:
a container portion for receiving the nutritional product, the container portion comprising a thermoformed plastic tub (2) having a base (14) and a peripheral wall (16) defining a product containing space;
a closure portion for attachment to the container portion, the closure portion comprising a circumferential rim (10) defining an access opening and a lid (12), pivotably attached to the rim by at least one hinge (11) having a hinge axis, the lid having an open position and a closed position in which it closes the access opening; and
a seal (6), separating the container portion from the lid portion and sealing the product containing space prior to use;
**characterised in that** the closure portion has a mass that is equal to or greater than the mass of the container portion and the hinge is provided with abutment surfaces (78, 86) on a rim portion and on a lid portion, arranged to engage one another to prevent opening of the lid beyond a point at which the package, when empty of product, is unstable and a detent mechanism (80, 85) that holds the lid in an open position and provides resistance to pivoting of the lid past a detent position in the direction of the closed position.

15. The package according to claim 14, wherein:
- the container portion further comprises a carton sleeve (4); or
- the closure portion further comprises an under-rim (8), permanently connected to the container portion; or
- the hinge is arranged to limit opening of the lid to a maximum angle of around 110 degrees; or
- the hinge axis is located at a hinge offset from a centreline of the package, which is at least 70% or even 80% greater than a base width of the container portion; or
- a height of the tub is greater than a width of the base, preferably more than 50% greater than the width of the base.

## Patentansprüche

1. Deckeleinheit zur Verwendung in einer Verpackung (1) für ein pulverförmiges Nahrungsprodukt mit:
einer umlaufenden Randfassung (10) zur Verbindung mit dem Behälter und eine Zugangsöffnung (26) bildend; und
einem Deckel (12), der an der Randfassung durch mindestens ein Scharnier (11) mit einer Scharnierachse schwenkbar befestigt ist, wobei der Deckel eine offene Stellung und eine geschlossene Stellung, in der er die Zugangsöffnung schließt, aufweist;
**dadurch gekennzeichnet, dass** das Scharnier einen Randabschnitt (82) in einem Stück mit der Randfassung und einen Deckelabschnitt (70) in einem Stück mit dem Deckel aufweist, die miteinander in Eingriff gebracht werden können, um den Deckel mit der Randfassung zusammenzufügen und so angeordnet sind, dass der Deckelabschnitt nur in der offenen Stellung des Deckels mit dem Randabschnitt in Eingriff gebracht werden kann, und dass in der geschlossenen Stellung des Deckels der Deckelabschnitt mit dem Randabschnitt verriegelt wird, indem eine Trennung des Deckelabschnitts vom Randabschnitt verhindert wird, wobei der Randabschnitt und der Deckelabschnitt des Scharniers einen Stift (74) und eine Aussparung (90) aufweisen, der Stift die Scharnierachse bildet und so angeordnet ist, um sich innerhalb der Aussparung zu drehen, so dass das Schwenken des Deckels ermöglicht ist; und der Stift ein länglicher fester Zylinder ist, der mit einer Anlagefläche (78) und einer Rastfläche (80) versehen ist, um eine Schwenkbewegung des Deckels einzuschränken wobei die Anlagefläche eine völlig offene Stellung des Deckels und die Rastfläche eine Zwischenstellung definiert.

2. Verpackung für ein pulverförmiges Nahrungsprodukt, umfassend:
einen Behälter (5) zur Aufnahme des Nahrungsprodukts, wobei der Behälter ein Unterteil (14) und eine Umfangswand (16) aufweist; und
die Deckeleinheit von Anspruch 1.

3. Verpackung nach Anspruch 2, wobei:
- die Aussparung einen Einlass (92) aufweist und der Stift einen Querschnitt besitzt, der seinen Eintritt in die Aussparung durch den Einlass erlaubt, um den Deckelabschnitt und den Randabschnitt in Eingriff zu bringen, wobei der Einlass in einer Richtung parallel zu einer Ebene der Zugangsöffnung ausgerichtet ist; oder
- der Deckelabschnitt mit dem Randabschnitt durch eine Schnappverbindung zwischen dem Stift und der Aussparung in Eingriff gebracht wird; oder
- der Stift an seinen beiden Enden gehalten wird; oder
- die Anlagefläche und die Rastfläche sich von einem äußeren Umfang des Zylinders erstrecken; oder
- der Stift auf dem Deckelabschnitt vorgesehen ist und die Aussparung auf dem Randabschnitt vorgesehen ist; oder
- der Deckel durch zwei Scharniere an der Randfassung schwenkbar befestigt ist.

4. Verpackung nach Anspruch 2 oder 3, wobei das Scharnier auf dem Deckelabschnitt und auf dem Randabschnitt Anlageflächen (78, 86) aufweist, die bei einer völlig offenen Stellung des Deckels miteinander in Eingriff kommen, um weiteres Öffnen zu verhindern, und wobei die völlig offene Stellung des Deckels vorzugsweise zwischen 100 Grad und 150 Grad von der geschlossenen Stellung, besser etwa 120 Grad, liegt.

5. Verpackung nach einem der Ansprüche 2 bis 4, wobei das Scharnier einen Rastmechanismus (80, 85) aufweist, der den Deckel in einer offenen Stellung hält und Widerstand gegen das Schwenken des Deckels hinter eine Raststellung in Richtung der geschlossenen Stellung bewirkt, und wobei die Raststellung vorzugsweise in einem Winkel von zwischen 70 Grad und 110 Grad von der geschlossenen Stellung, besser etwa 90 Grad, liegt.

6. Verpackung nach einem der Ansprüche 2 bis 5, wobei die Randfassung einen aufrechtstehenden Umfangsflansch (56) aufweist, der die Öffnung umgibt, und der Deckel eine nach unten sich erstreckende Ausnehmung (58) aufweist, wobei der Flansch beim Schließen des Deckels in die Ausnehmung eingesetzt wird, um eine erste Abdichtung zu bilden.

7. Verpackung nach Anspruch 2 bis 6, wobei der Deckel eine Außenfläche (64) aufweist, die sich zu einem äußeren Umfang erstreckt und die Scharnierachse mit dem äußeren Umfang kollinear ist.

8. Verpackung nach einem der Ansprüche 2 bis 7, wobei die Randfassung eine innere Einfassung (55) zum Eingriff mit dem Behälter aufweist, um eine zweite Abdichtung zu bilden, und eine äußere Einfassung (66), die eine Außenfläche der Verpackung bildet, und die Scharnierachse radial zwischen der inneren und der äußeren Einfassung angeordnet ist.

9. Verpackung nach einem der Ansprüche 2 bis 8, wobei der Behälter des Weiteren einen spritzgegossenen Unterrand (8) aufweist, der mit der Umfangswand des Behälters verbunden ist, und die Randfassung mit dem Unterrand abdichtend in Eingriff kommt, und wobei die Randfassung und der Unterrand vorzugsweise in einer Schnappeingriffsverbindung miteinander verbunden sind.

10. Verpackung nach einem der Ansprüche 2 bis 9, wobei das Unterteil und die Umfangswand des Behälters eine dünnwandige, tiefgezogene Wanne (2) mit einer Wanddicke von zwischen 0,1 und 0,6 mm, vorzugsweise zwischen 0,2 mm und 0,4 mm aufweisen.

11. Verpackung nach einem der Ansprüche 2 bis 10, wobei der Deckel oder die Randfassung mit einer Verschließanzeige gegen offensichtliche unerlaubte Eingriffe versehen sind, die an einer Stelle gegenüber dem Scharnier vorgesehen ist.

12. Verpackung nach einem der Ansprüche 2 bis 11, des Weiteren umfassend eine Menge von pulverförmigem Nahrungsprodukt, die innerhalb des Behälters abgedichtet ist, und wobei das Nahrungsprodukt vorzugsweise eine Kinderfertignahrung aus Milch enthält.

13. Verfahren zur Herstellung einer Verpackung für ein pulverförmiges Nahrungsprodukt, umfassend:
- Tiefziehen eines Behälters zur Aufnahme des Nahrungsprodukts, wobei der Behälter ein Unterteil und eine Umfangswand aufweist;
- Spritzgießen eines umlaufenden Randfassungs, der eine weite Zugangsöffnung bildet, die mit einem Randabschnitt eines Scharniers in einem Stück ausgebildet ist,
- Spritzgießen eines Deckels zum erneuten Schließen der Zugangsöffnung, der mit einem Deckelabschnitt eines Scharniers in einem Stück ausgebildet ist;
- Befestigen des Deckels an dem Randfassung durch Eingriff des Randabschnitts mit dem Deckelabschnitt in einer offenen Stellung des Deckels und nachfolgendes Schließen des Deckels auf die Zugangsöffnung, um eine Deckeleinheit zu bilden;
- Füllen des Behälters mit dem Produkt;
- Abdichten des Produkts innerhalb des Behälters durch eine Siegelfolie; und
- Verbinden der Deckeleinheit an dem Behälter,
wobei der Randabschnitt und der Deckelabschnitt des Scharniers einen Stift und eine Aussparung aufweisen, wobei der Stift die Scharnierachse bildet und so angeordnet ist, dass er innerhalb der Aussparung rotiert, um Schwenken des Deckels zu erlauben, und der Stift ein länglicher fester Zylinder ist, der mit einer Anlagefläche und einer Rastfläche versehen ist, um eine Schwenkbewegung des Deckels einzuschränken.

14. Verpackung (1) für ein pulverförmiges Nahrungsprodukt, umfassend:
einen Behälterabschnitt zur Aufnahme des Nahrungsprodukts, wobei der Behälterabschnitt eine tiefgezogene, plastische Wanne (2) mit einem Unterteil (14) und einer Umfangswand (16) einschließt, die einen ein Produkt aufnehmenden Raum bilden;
einen Verschlussabschnitt zur Befestigung am Behälterabschnitt, wobei der Verschlussabschnitt einen umlaufenden Randfassung (10), der eine Zugangsöffnung bildet, und einen Deckel (12), der an dem Randfassung durch mindestens ein Scharnier (11) mit einer Scharnierachse schwenkbar befestigt ist, aufweist, wobei der Deckel eine offene Stellung und eine geschlossene Stellung, in der er die Zugangsöffnung schließt, aufweist; und
eine Dichtung (6), die den Behälterabschnitt vom Deckelabschnitt trennt und den das Produkt enthaltenden Raum vor Gebrauch abdichtet;
**dadurch gekennzeichnet, dass** der Verschlussabschnitt eine Masse besitzt, die der Masse des Behälterabschnitts entspricht oder größer als diese ist, und das Scharnier mit Anlageflächen (78, 86) an einem Randabschnitt und an einem Deckelabschnitt versehen sind, eingerichtet, um miteinander in Eingriff zu kommen, so dass das Öffnen des Deckels über einen Punkt hinaus verhindert wird, bei dem die Verpackung, ohne Produkt, instabil ist, und einen Rastmechanismus (80, 85), der den Deckel in einer offenen Stellung hält und Widerstand gegen das Schwenken des Deckels hinter eine Raststellung in Richtung der geschlossenen Stellung bewirkt.

15. Verpackung nach Anspruch 14, wobei:
- der Behälterabschnitt des Weiteren eine Kartonhülse (4) aufweist; oder
- der Verschlussabschnitt des Weiteren einen Unterrand (8) aufweist, der mit dem Behälterabschnitt ständig verbunden ist; oder
- das Scharnier eingerichtet ist, um das Öffnen des Deckels bis zu einem maximalen Winkel von ungefähr 110 Grad einzuschränken; oder
- die Scharnierachse von einer Mittellinie der Verpackung einem Abstand versetzt angeordnet ist, die mindestens 70 % oder sogar 80 % größer als eine Breite des Unterteils des Behälterabschnitts ist; oder
- eine Höhe der Wanne größer ist als eine Breite des Unterteils, vorzugsweise mehr als 50 % größer als die Breite des Unterteils.

## Revendications

1. Ensemble de couvercle destiné à être utilisé dans un emballage (1) pour un produit de nutrition en poudre comprenant :
un rebord circonférentiel (10) pour le raccordement au récipient et définissant une ouverture d'accès (26) ; et
un couvercle (12) fixé, de manière pivotante, au rebord par au moins une charnière (11) ayant un axe de charnière, le couvercle ayant une position ouverte et une position fermée dans laquelle il ferme l'ouverture d'accès ;
**caractérisé en ce que** la charnière comprend une partie de rebord (82) faisant partie intégrante du rebord, et une partie de couvercle (70) faisant partie intégrante du couvercle, qui peuvent se mettre en prise entre elles afin d'assembler le couvercle au rebord et sont agencées de sorte que la partie de couvercle peut être uniquement mise en prise avec la partie de rebord dans la position ouverte du couvercle et **en ce que**, dans la position fermée du couvercle, la partie de couvercle est bloquée sur la partie de rebord, empêchant la séparation de la partie de couvercle de la partie de rebord, dans lequel la partie de rebord et la partie de couvercle de la charnière comprennent une broche (74) et un évidement (90), la broche définissant l'axe de charnière et étant agencée pour tourner à l'intérieur de l'évidement afin de permettre le pivotement du couvercle et la broche est un cylindre solide allongé prévu avec une surface de butée (78) et une surface de détente (80) pour limiter le mouvement de pivotement du couvercle, dans lequel la surface de butée définisse une position complètement ouverte du couvercle et la surface de détente définisse une position d'ouverture intermédiaire.

2. Emballage pour un produit de nutrition en poudre comprenant :
un récipient (5) pour recevoir le produit de nutrition, le récipient ayant une base (14) et une paroi périphérique (16) ; et
l'ensemble de couvercle selon la revendication 1.

3. Emballage selon la revendication 2, dans lequel :
l'évidement a une entrée (92) et la broche a une section transversale permettant son entrée dans l'évidement par l'entrée pour mettre en prise la partie de couvercle et la partie de rebord, l'entrée étant orientée dans une direction parallèle à un plan de l'ouverture d'accès ; ou bien
la partie de couvercle est mise en prise avec la partie de rebord par un raccordement d'encliquetage entre la broche et l'évidement ; ou bien
la broche est supportée au niveau de ses deux extrémités, ou bien
la surface de butée et la surface de détente s'étendent à partir d'une circonférence externe du cylindre ; ou bien
la broche est prévue sur la partie de couvercle et l'évidement est prévu sur la partie de rebord ; ou bien
le couvercle est fixé, de manière pivotante, sur le rebord par deux charnières.

4. Emballage selon la revendication 2 ou 3, dans lequel la charnière comprend des surfaces de butée (78, 86) sur la partie de couvercle et la partie de rebord qui se mettent en prise entre elles dans une position complètement ouverte du couvercle pour empêcher l'ouverture supplémentaire et dans lequel la position complètement ouverte du couvercle est de préférence comprise entre 100 degrés et 150 degrés depuis la position fermée, encore de préférence environ 120 degrés.

5. Emballage selon l'une quelconque des revendications 2 à 4, dans lequel la charnière comprend un mécanisme de détente (80, 85) qui maintient le couvercle dans une position ouverte et fournit la résistance au pivotement du couvercle au-delà d'une position de détente dans la direction de la position fermée, et dans lequel la position de détente est de préférence à un angle compris entre 70 degrés et 110 degrés depuis la position fermée, encore de préférence environ 90 degrés.

6. Emballage selon l'une quelconque des revendications 2 à 5, dans lequel le rebord comprend une bride circonférentielle droite (56) entourant l'ouverture et le couvercle comprend une rainure s'étendant vers le bas (58), la bride étant insérée dans la rainure lors de la fermeture du couvercle afin de former un premier joint d'étanchéité.

7. Emballage selon l'une quelconque des revendications 2 à 6, dans lequel le couvercle a une surface extérieure (64) s'étendant sur une circonférence externe et l'axe de charnière est colinéaire avec la circonférence externe.

8. Emballage selon l'une quelconque des revendications 2 à 7, dans lequel le rebord a une jupe interne (55) pour la mise en prise avec le récipient afin de former un second joint d'étanchéité et une jupe externe (66) formant une surface extérieure de l'emballage et l'axe de charnière est positionné de manière radiale entre les jupes interne et externe.

9. Emballage selon l'une quelconque des revendications 2 à 8, dans lequel le récipient comprend en outre un sous-rebord moulé par injection (8), relié à la paroi périphérique du récipient et le rebord se met en prise de manière étanche avec le sous-rebord et dans lequel le rebord et le sous-rebord se raccordent de préférence dans un raccordement par encliquetage.

10. Emballage selon l'une quelconque des revendications 2 à 9, dans lequel la base et la paroi périphérique du récipient comprennent un bac thermoformé à paroi fine (2) comprenant une épaisseur de paroi comprise entre 0,1 et 0,6 mm, de préférence entre 0,2 mm et 0,4 mm.

11. Emballage selon l'une quelconque des revendications 2 à 10, dans lequel le couvercle ou le rebord sont prévus avec une indication de fermeture d'inviolabilité prévue à un emplacement opposé à la charnière.

12. Emballage selon l'une quelconque des revendications 2 à 11, comprenant en outre une quantité de produit de nutrition en poudre scellé à l'intérieur de l'emballage et dans lequel le produit de nutrition comprend de préférence une formule de lait pour bébé.

13. Procédé pour fabriquer un emballage pour un produit de nutrition en poudre comprenant les étapes consistant à :
thermoformer un récipient pour recevoir le produit de nutrition, le récipient ayant une base et une paroi périphérique ;
mouler par injection un rebord circonférentiel définissant une large ouverture d'accès, formée de manière solidaire avec une partie de rebord d'une charnière,
mouler par injection un couvercle pour refermer l'ouverture d'accès, formée de manière solidaire avec une partie de couvercle d'une charnière ;
fixer le couvercle sur le rebord en mettant en prise la partie de rebord sur la partie de couvercle dans une position ouverte du couvercle et fermer ensuite le couvercle sur l'ouverture d'accès afin de former un ensemble de couvercle ;
remplir le récipient avec le produit ;
sceller le produit à l'intérieur du récipient au moyen d'une feuille d'étanchéité ; et
raccorder l'ensemble de couvercle au récipient ;
dans lequel la partie de rebord et la partie de couvercle de la charnière comprennent une broche et un évidement, la broche définissant l'axe de charnière et étant agencée pour tourner à l'intérieur de l'évidement pour permettre le pivotement du couvercle et la broche est un cylindre solide allongé prévu avec une surface de butée et une surface de détente pour limiter le mouvement de pivotement du couvercle.

14. Emballage (1) pour un produit de nutrition en poudre comprenant :
une partie de récipient pour recevoir le produit de nutrition, la partie de récipient comprenant un bac en plastique thermoformé (2) ayant une base (14) et une paroi périphérique (16) définissant un espace de confinement de produit ;
une partie de fermeture pour la fixation à la partie de récipient, la partie de fermeture comprenant un rebord circonférentiel (10) définissant une ouverture d'accès et un couvercle (12), fixé de manière pivotante au rebord par au moins une charnière (11) ayant un axe de charnière, le couvercle ayant une position ouverte et une position fermée dans laquelle il ferme l'ouverture d'accès ; et
une feuille d'étanchéité (6), séparant la partie de récipient de la partie de couvercle et scellant l'espace de confinement de produit avant l'usage ;
**caractérisé en ce que** la partie de fermeture a une masse qui est égale ou supérieure à la masse de la partie de récipient et la charnière est prévue avec des surfaces de butée (78, 86) sur une partie de rebord et une partie de couvercle, agencées pour se mettre en prise entre elles afin d'empêcher l'ouverture du couvercle au-delà d'un point auquel l'emballage, lorsqu'il est dépourvu de produit, est instable et un mécanisme de détente (80, 85) qui maintient le couvercle dans une position ouverte et fournit la résistante au pivotement du couvercle au-delà d'une position de détente dans la direction de la position fermée.

15. Emballage selon la revendication 14, dans lequel :
la partie de récipient comprend en outre un manchon de carton (4) ; ou bien
la partie de fermeture comprend en outre un sous-rebord (8) raccordé, en permanence, à la partie de récipient ; ou bien
la charnière est agencée pour limiter l'ouverture du couvercle à un angle maximum d'environ 110 degrés ; ou bien
l'axe de charnière est positionné décalée d'une ligne centrale de l'emballage par une distance, qui est au moins 70% ou même 80% supérieur à une largeur de base de la partie de récipient ; ou bien
une hauteur du bac est supérieure à une largeur de la base, de préférence supérieure à 50% de la largeur de la base.
